# EUROPEAN PATENT APPLICATION

(11) **EP 4 576 514 A1**
(43) Date of publication of application: **25.06.2025**
(21) Application number: 22955674.1
(22) Date of filing: 16.08.2022
(51) Int. Cl.: H02K 7/116, H02K 11/30, H02M 7/48

(54) **ELECTRIC DRIVE APPARATUS**

(71) Applicant: MITSUBISHI ELECTRIC CORPORATION, Chiyoda-ku Tokyo 100-8310 (JP)
(72) Inventor: NAKAMURA, Masashi, Tokyo 100-8310 (JP); MURAKAMI, Tadashi, Tokyo 100-8310 (JP); FUJITA, Masahiko, Tokyo 100-8310 (JP); HASHIBA, Takashi, Tokyo 100-8310 (JP); SAKAI, Koji, Tokyo 100-8310 (JP); FUJIOKA, Kazuhiro, Tokyo 100-8310 (JP); AZUMA, Keita, Tokyo 100-8310 (JP); HIGASHINO, Hiroyuki, Tokyo 100-8310 (JP); NAKAYAMA, Haruki, Tokyo 100-8310 (JP)
(74) Representative: Plasseraud IP
(86) International application number: PCT/JP2022/030947
(87) International publication number: WO 2024/038500

(57) **Abstract**

To provide an electric drive apparatus capable of miniaturizing the apparatus by the arrangement of the inverter circuit, and assembling the inverter circuit to the apparatus separately from the reduction gear. An electric drive apparatus (1), wherein the rotation shafts of the reduction gear (17) other than the input rotation shaft (31) is arranged on the one side in the first orthogonal direction (Y1) than the input rotation shaft (31), and the inverter circuit (10) is arranged outside the reduction gear housing space (46), and on the radial-direction outside of the input rotation shaft except the one side in the first orthogonal direction (Y1) of the input rotation shaft (31); and is arranged on one side in the axial direction (X1) than the rotary electric machine (20), has a part overlapping with the rotary electric machine (20) when viewed in the axial direction (X).

## Description

### TECHNICAL FIELD

The present disclosure relates to an electric drive apparatus.

### BACKGROUND ART

Recently, in consideration of environmental problems such as global warming, the electrification of the vehicle is rapidly progressing, replacing the conventional vehicle powered by the internal combustion engine with a system driven by the rotary electric machine which does not emit carbon dioxide during driving. The electric drive apparatus requires not only the rotary electric machine but also the reduction gear which reduces the rotational speed of the rotary electric machine, and the inverter circuit which converts between DC power and AC power.

There has been proposed an apparatus which integrates and miniaturizes these rotary electric machines, reduction gear, and inverter circuit, which have conventionally been manufactured individually and connected to each other.

### CITATION LIST

### Patent Literature

Patent document 1: JP 5900012 B
Patent document 2: WO 2019/152372 A

### SUMMARY OF INVENTION

### Technical Problem

For example, in patent document 1, the connecting part between the output rotation shaft of the reduction gear and the wheel axle can be arranged in the c right and left enter of the vehicle as much as possible, the inverter circuit is arranged on the opposite side of the rotary electric machine interposing the reduction gear. However, since the reduction gear is interposed between the rotary electric machine and the inverter circuit, the connection lines (the bus bars which connect the power lines, and the sensor signal lines for the rotary electric machine control) between the rotary electric machine and the inverter circuit become long, there are problems in terms of efficiency, cost, and noise resistance.

In patent document 2, although the distance between the rotary electric machine and the inverter circuit is brought close, it is necessary to assemble the reduction gear and the inverter circuit inside the case at the same time. Accordingly, the lubricating oil of the reduction gear and the like may be mixed in the inverter circuit. There is a problem that the degree of freedom of the assembly is low, and the workability and the productivity are deteriorated.

Then, the purpose of the present disclosure is to provide an electric drive apparatus capable of miniaturizing the apparatus by the arrangement of the inverter circuit, and assembling the inverter circuit to the apparatus separately from the reduction gear.

### Solution to Problem

An electric drive apparatus according to present disclosure, including:
an inverter circuit that converts between DC power and AC power;
a rotary electric machine that is provided with a winding to which AC power converted by an inverter circuit is supplied, and a rotor rotation shaft rotating integrally with a rotor;
a reduction gear that reduces and outputs the rotational speed of the rotor rotation shaft; and
a case that houses at least the reduction gear,
wherein the reduction gear is provided with at least a plurality of rotation shafts arranged in parallel with an axial direction of the rotor rotation shaft, and a plurality of gears,
the plurality of rotation shafts includes an input rotation shaft extending on coaxially from the rotor rotation shaft to one side in the axial direction, and rotating integrally with the rotor rotation shaft, and an output rotation shaft outputting rotation to outside of the reduction gear,
the case is provided with a second case member with a bottomed tubular reduction gear housing opening part opened to the one side in the axial direction, and a first case member closing an opening of the reduction gear housing opening part,
the reduction gear is housed in a reduction gear housing space formed by the reduction gear housing opening part of the second case member and the first case member,
defining a specific direction orthogonal to the axial direction as a first orthogonal direction, one or more of the rotation shafts other than the input rotation shaft are arranged on one side in the first orthogonal direction than the input rotation shaft,
the inverter circuit is arranged outside the reduction gear housing space, and on a radial-direction outside of the input rotation shaft except the one side in the first orthogonal direction of the input rotation shaft; and is arranged on the one side in the axial direction than the rotary electric machine, and has a part which overlaps with the rotary electric machine when viewed in the axial direction.

### Advantage of Invention

According to the electric drive apparatus of the present disclosure, since one or more of the rotation shafts of the reduction gear other than the input rotation shaft are arranged on the one side in the first orthogonal direction than the input rotation shaft, a space where each part of the reduction gear is not arranged is formed in a space which is on the radial-direction outside of the input rotation shaft except the one side in the first orthogonal direction of the input rotation shaft, and overlaps with the rotary electric machine when viewed in the axial direction. The inverter circuit can be arranged in this space, and the electric drive apparatus can be miniaturized. Since the inverter circuit is arranged outside the reduction gear housing space, the reduction gear and the inverter circuit need not be assembled in the case at the same time like the patent document 2. That is, when the reduction gear housing opening part of the second case member and the first case member are fitted, and the reduction gear is assembled to the reduction gear housing space, it is not necessary to assemble the inverter circuit. Accordingly, the lubricating oil of the reduction gear and the like can be prevented from mixing in the inverter circuit. The degree of freedom of assembly is enhanced, and workability and productivity are improved.

### BRIEF DESCRIPTION OF THE DRAWINGS

FIG. 1 is a skeleton diagram showing the schematic configuration of the electric drive apparatus according to Embodiment 1;
FIG. 2 is an oblique drawing of the schematic configuration of the reduction gear according to Embodiment 1;
FIG. 3 is an oblique drawing of the electric drive apparatus according to Embodiment 1;
FIG. 4 is a perspective drawing of the electric drive apparatus viewed on the other side in the axial direction, according to Embodiment 1;
FIG. 5 is a perspective drawing of the electric drive apparatus viewed on one side in the second orthogonal direction, according to Embodiment 1;
FIG. 6 is a schematic circuit diagram of the inverter circuit according to Embodiment 1;
FIG. 7 is a figure explaining the direction of the electric drive apparatus mounted on the vehicle according to Embodiment 1;
FIG. 8 is an oblique drawing of the electric drive apparatus according to Embodiment 2;
FIG. 9 is a perspective drawing of the electric drive apparatus viewed on one side in the second orthogonal direction, according to Embodiment 2;
FIG. 10 is a perspective drawing of the electric drive apparatus viewed on the other side in the first orthogonal direction, according to Embodiment 2; and
FIG. 11 is a figure explaining the direction of the electric drive apparatus mounted on the vehicle according to Embodiment 2.

### DETAILED DESCRIPTION OF THE EMBODIMENTS

### 1. Embodiment 1

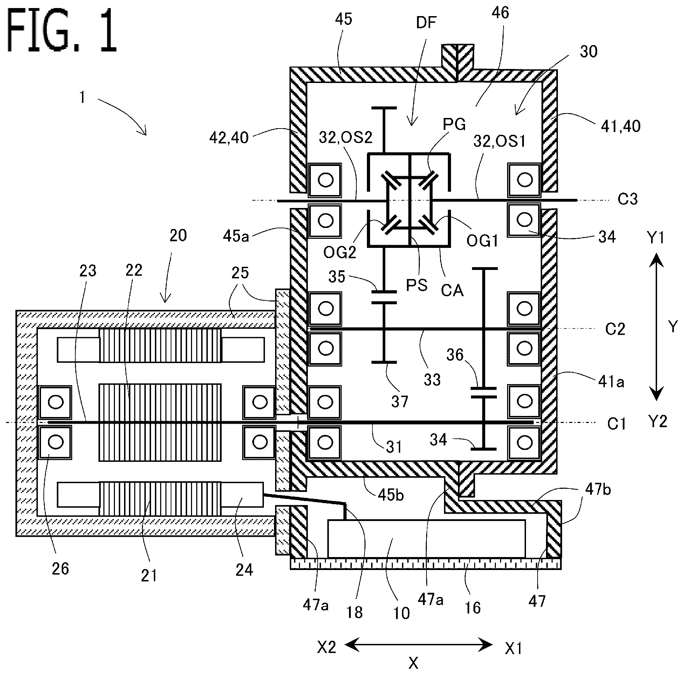

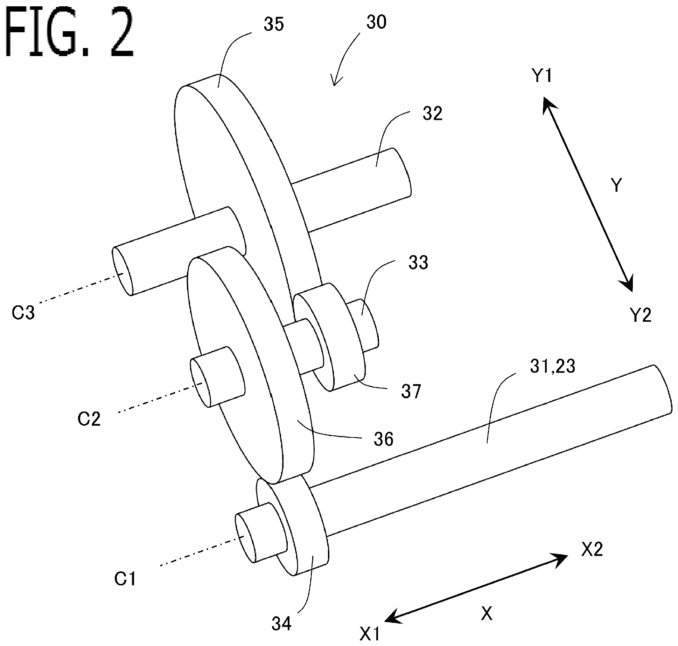

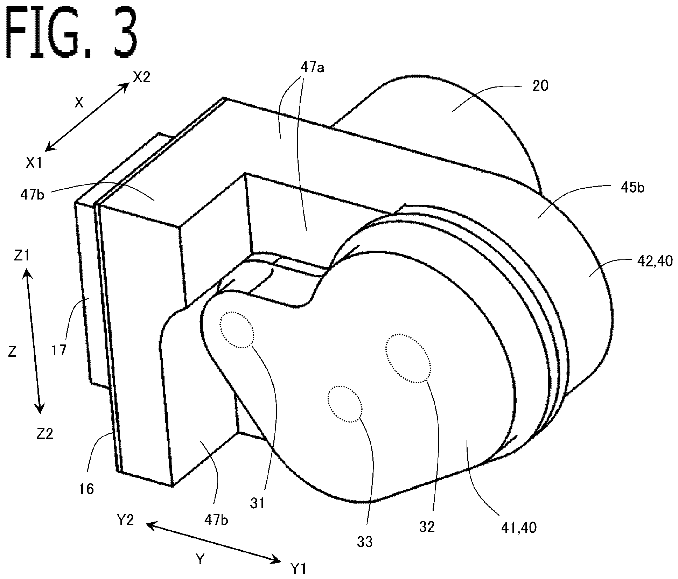

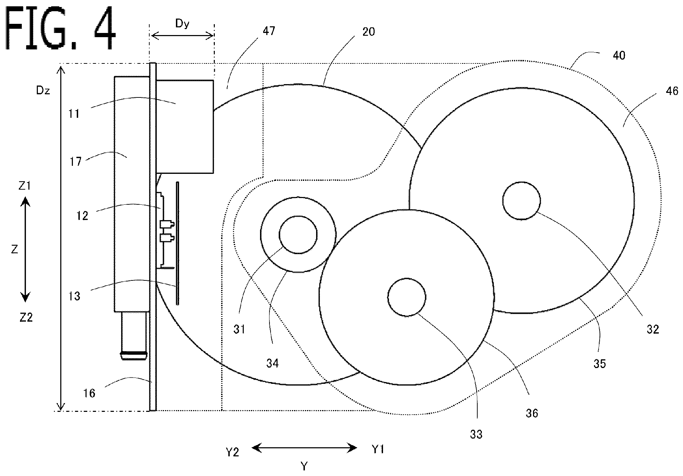

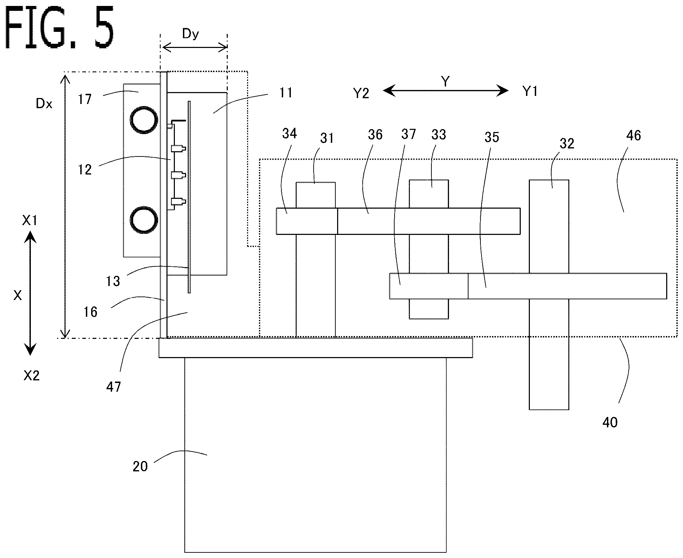

An electric drive apparatus 1 according to Embodiment 1 will be explained with reference to drawings. FIG. 1 is a skeleton diagram showing a schematic configuration of the electric drive apparatus 1. FIG. 2 is an oblique drawing of the schematic configuration of the reduction gear 30. FIG. 3 is an oblique drawing of the electric drive apparatus 1. FIG. 4 is a perspective drawing of the electric drive apparatus 1 viewed on the other side in the axial direction X2. FIG. 5 is a perspective drawing of the electric drive apparatus 1 viewed on one side in the second orthogonal direction Z1.

The electric drive apparatus 1 is provided with an inverter circuit 10, a rotary electric machine 20, a reduction gear 30, a case 40 and the like.

In the present disclosure, a direction parallel to an axial center C1 of a rotor rotation shaft 23 of the rotary electric machine 20 is defined as an axial direction X. One side in the axial direction X1, and the other side in the axial direction X2 which is the opposite side of the one side in the axial direction X1 are defined. A specific direction which is orthogonal to the axial direction X is defined as a first orthogonal direction Y. One side in the first orthogonal direction Y1, and the other side in the first orthogonal direction Y2 which is the opposite side of the one side in the first orthogonal direction Y1 are defined. A direction which is orthogonal to the axial direction X and the first orthogonal direction Y is defined as a second orthogonal direction Z. One side in the second orthogonal direction Z1, and the other side of the second orthogonal direction Z2 which is the opposite side of the one side in the second orthogonal direction Z1 are defined.

### <Rotary electric machine 20>

The rotary electric machine 20 is provided with a stator 21, a rotor 22, and a rotor rotation shaft 23 integrally rotating with the rotor 22. The rotary electric machine 20 is provided with a winding 24 to which AC power converted by the inverter circuit 10 is supplied. The winding 24 is wound around the stator 21. In the present embodiment, three-phase windings 24 of U phase, V phase, and W phase are provided. The phase number may be other than three-phase, and a plurality of sets of three-phase windings may be provided.

In the present embodiment, the rotary electric machine 20 is a permanent magnet type synchronous rotary electric machine in which the permanent magnet is provided in the rotor 20. The AC rotary machine 20 may be a field winding type synchronous rotary electric machine with an electromagnet in the rotor 22, or may be an induction rotary electric machine with an iron core in the rotor 22.

The rotary electric machine 20 can perform one or both of power running and power generation. The rotary electric machine 20 performs the power running by the AC power supplied from the inverter circuit 10, or the rotary electric machine 20 supplies the generated AC power to the inverter circuit 10.

The components of the rotary electric machine 20, such as the stator 21, the rotor 22, the rotor rotation shaft 23, and the winding 24 are housed in a motor case 25. The part on one side in the axial direction X1 and the part on the other side in the axial direction X2 of the rotor rotation shaft 23 are rotatably supported by the motor case 25 via the bearings 26. The rotor rotation shaft 23 penetrated a side wall on the one side in the axial direction X1 of the motor case 25, and projects to the one side in the axial direction X1.

### <Circuit configuration of inverter circuit 10>

The inverter circuit 10 is a power conversion circuit which converts between DC power and AC power. The inverter circuit 10 is provided with a smoothing capacitor 11, a power semiconductor circuit 12, and a circuit board 13.

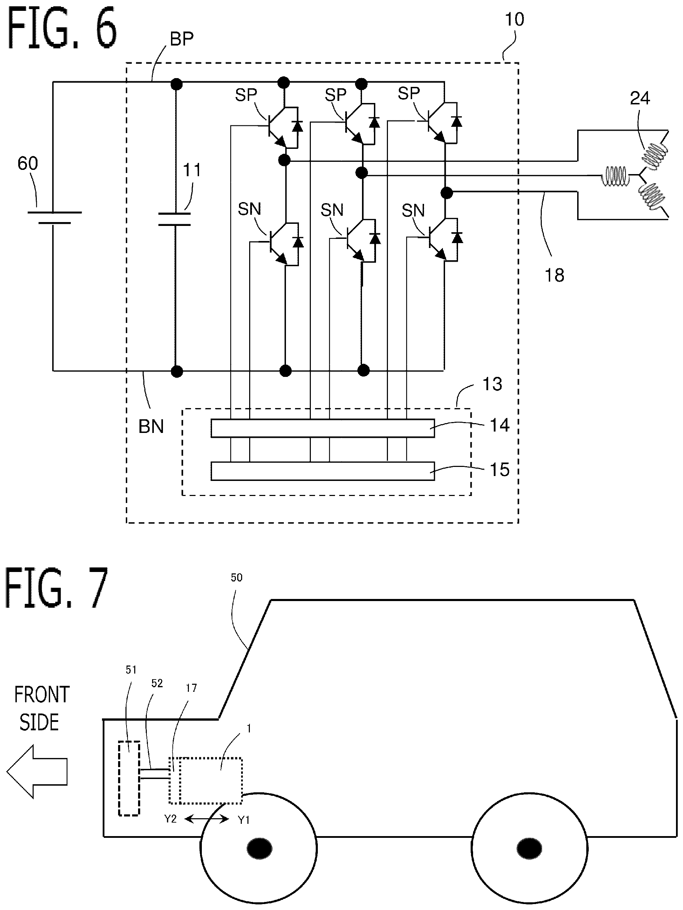

In the present embodiment, the inverter circuit 10 converts between the DC power and the AC power of three-phase. FIG. 6 shows the circuit diagram of the inverter circuit 10. The inverter circuit 10 is provided with three sets of series circuits (leg) in each of which a high potential side switching device SP connected to a high potential side bus line BP and a low potential side switching device SN connected to a low potential side bus line BN are connected in series, corresponding to each phase of three-phase. A connection node of two switching devices in the series circuit of each phase is connected to the winding 24 of the corresponding phase via a connection wiring 18 described below. The high potential side bus line BP is connected to a high potential side of a DC power source 60 which is outside of the electric drive apparatus 1, and the low potential side bus line BN is connected to a low potential side of the outside DC power source 60.

The switching device is the power semiconductor circuit 12, and IGBT (Insulated Gate Bipolar Transistor), MOSFET (Metal Oxide Semiconductor Field Effect Transistor), or the like is used. The switching device is modularized arbitrarily.

The smoothing capacitor 11 is connected between the high potential side bus line BP and the low potential side bus line BN. The circuit board 13 is provided with a gate driving circuit 14 which outputs an on/off signal to a gate terminal of each switching device according to an on/off command value of each switching signal outputted from the control circuit 15. The circuit board 13 is provided with the control circuit 15 which outputs the on/off command value of the switching device to each gate driving circuit. The control circuit 15 calculates an AC voltage command value of each phase, and the like, and outputs the on/off command value of each switching signal of each phase. The control circuit 15 may be provided outside the inverter circuit 10, or outside the electric drive apparatus 1.

### <Reduction gear 30>

The reduction gear 30 reduces and outputs a rotational speed of the rotor rotation shaft 23. The reduction gear 30 is provided with a plurality of rotation shafts arranged in parallel with the axial direction X of the rotor rotation shaft 23, and a plurality of gears. The plurality of rotation shafts include an input rotation shaft 31 extending on coaxially from the rotor rotation shaft 23 to one side in the axial direction X1, and rotating integrally with the rotor rotation shaft 23, and an output rotation shaft 32 outputting rotation to outside of the reduction gear 30.

In the present embodiment, as shown in FIG. 1, the reduction gear 30 is provided with a differential gear DF. And, two output shafts OS1, OS2 on one side and the other side in the axial direction X1, X2 of the differential gear DF (hereinafter, referred to as a first differential output shaft OS1 and a second differential output shaft OS2) are the output rotation shafts 32. The differential gear DF is provided with an output input gear 35 rotatable around an axial center C3 of the first and second differential output shafts (the output rotation shafts 32), a carrier CA rotating integrally with the output input gear 35, a pinion rotation shaft PS rotating integrally with the carrier CA and orthogonal to the axial center C3 of the output rotation shaft 32, a pair of pinion gears PG rotatable around the pinion rotation shaft PS, a first output gear OG1 engaging with the pinion gear PG and rotating integrally with the first differential output shaft OS1, and a second output gear OG2 engaging with the pinion gear PG and rotating integrally with the second differential output shaft OS2. The pinion rotation shaft PS, the pinion gear PG, the first and second output gears OG1, OG2 are housed inside the carrier CA.

The reduction gear 30 may not be provided with the differential gear DF. The output input gear 35 and the output rotation shaft 32 may be configured to rotate integrally. Each figure except FIG. 1 shows the case where the differential gear DF is not provided but the output input gear 35 and the output rotation shaft 32 is configured to rotate integrally. In these figures, the output rotation shaft 32 penetrates and projects the case 40 (the first case 41) to the other side in the axial direction X2, and does not penetrate the case 40 to one side in the axial direction X1.

One intermediate rotation shaft 33 is provided as a rotation shaft of the reduction gear 30 for transmitting rotation between the input rotation shaft 31 and the output rotation shaft 32. The axial center C1 of the input rotation shaft 31, the axial center C2 of the intermediate rotation shaft 33, and the axial center C3 of the output rotation shaft 32 are parallel with each other.

An input output gear 34 rotating integrally with the input rotation shaft 31 is provided. An intermediate input gear 36 engaging with the input output gear 34 of the input rotation shaft 31 and rotating integrally with the intermediate rotation shaft 33 is provided. An intermediate output gear 37 rotating integrally with the intermediate rotation shaft 33 is provided. The teeth number and the diameter of the intermediate input gear 36 are larger than the teeth number and the diameter of the input output gear 34. The teeth number and the diameter of the intermediate output gear 37 are smaller than the teeth number and the diameter of the intermediate input gear 36. The teeth number and the diameter of the output input gear 35 are larger than the teeth number and the diameter of the intermediate output gear 37. Accordingly, the reduction gear 30 reduces in two steps.

The positions of the plurality of rotation shafts (in this example, the input rotation shaft 31, the intermediate rotation shaft 33, the output rotation shaft 32) of the reduction gear 30 in the axial direction X have mutually overlapping parts.

The parts on one side in the axial direction X1 of the plurality of rotation shafts 31, 32, 33 of the reduction gear 30 are rotatably supported by the first case member 41 via the bearings 34. The parts on the other side in the axial direction X2 of the plurality of rotation shafts 31, 32, 33 of the reduction gear 30 are rotatably supported by the second case member 42 via the bearings 34.

The input output gear 34 and the intermediate input gear 36 are arranged on one side in the axial direction X1 than the central part of the reduction gear 30 in the axial direction X. The intermediate output gear 37 and the output input gear 35 are arranged on the other side in the axial direction X2 than the central part of the reduction gear 30 in the axial direction X.

The intermediate rotation shaft 33 may not be provided as the rotation shaft of the reduction gear 30. And, the input output gear 34 and the output input gear 35 may be engaged, or a plurality of intermediate rotation shafts may be provided. The input rotation shaft 31 and the rotor rotation shaft 23 may be formed integrally. Various reduction gear configurations which reduce and output the rotational speed of the rotor rotation shaft 23 may be used as the reduction gear 30.

### <Reduction gear housing space 46 of case 40>

The case 40 houses the reduction gear 30 at least. The case 40 is provided with a second case member 42 with a bottomed tubular reduction gear housing opening part 45 opened to the one side in the axial direction X1, and a first case member 41 closing an opening of the reduction gear housing opening part 45. The reduction gear 30 is housed in a reduction gear housing space 46 formed by the reduction gear housing opening part 45 of the second case member 42, and the first case member 41.

The second case member 42 covers the part on the other side in the axial direction X2 of the reduction gear 30. The parts on the other side in the axial direction X2 of the plurality of rotation shafts of the reduction gear 30 are rotatably supported via the bearings 34. The first case member 41 covers the part on the one side in the axial direction X1 of the reduction gear 30. The parts on the one side in the axial direction X1 of the plurality of rotation shafts of the reduction gear 30 are rotatably supported via the bearings 34.

The second case member 42 is provided with a bottomed tubular reduction gear housing opening part 45 opened to the one side in the axial direction X1. A bottom wall 45a on the other side in the axial direction X2 of the reduction gear housing opening part 45 of the second case member 42 rotatably supports the parts on the other side in the axial direction X2 of the plurality of rotation shafts of the reduction gear 30 via the bearings 34. The bottom wall 45a is provided with a through hole through which the input rotation shaft 31 penetrates to the other side in the axial direction X2, and a through hole through which the output rotation shaft 32 (the second differential output shaft OS2) penetrates to the other side in the axial direction X2.

The rotary electric machine 20 is arranged on the other side in the axial direction X2 of the second case member 42. The end on the one side in the axial direction X1 of the motor case 25 of the rotary electric machine 20 is fixed to the end on the other side in the axial direction X2 of the second case member 42 by a fastening member such as a bolt. The second case member 42 and the motor case 25 may be formed integrally.

The first case member 41 closes the opening of the reduction gear housing opening part 45 of the second case member 42. The reduction gear housing opening part 45 of the second case member 42 and the first case member 41 are fitted and fixed by a fastening member such as a bolt. A fitting face between the opening of the reduction gear housing opening part 45 of the second case member 42 and the first case member 41 is along a plane orthogonal to the axial direction X.

The first case member 41 is formed in a bottomed tubular shape opened to the other side in the axial direction X2. The bottom wall 41a on the one side in the axial direction X1 of the first case member 41 rotatably support the parts on the one side in the axial direction X1 of the plurality of rotation shafts of the reduction gear 30 via the bearings 34. The bottom wall 41a is provided with a through hole through which the output rotation shaft 32 (the first differential output shaft OS1) penetrates to the one side in the axial direction X1 (only shown in FIG. 1).

### <Arrangement of each part>

One or more of the rotation shafts (in this example, the output rotation shaft 32, the intermediate rotation shaft 33) of the reduction gear 30 other than the input rotation shaft 31 are arranged on the one side in the first orthogonal direction Y1 than the input rotation shaft 31. The inverter circuit 10 is arranged outside the reduction gear housing space 46, and on the radial-direction outside of the input rotation shaft except the one side in the first orthogonal direction Y1 of the input rotation shaft 31; and is arranged on the one side in the axial direction X1 than the rotary electric machine 20, and has a part overlapping with the rotary electric machine 20 when viewed in the axial direction X.

According to this configuration, since one or more of the rotation shafts of the reduction gear 30 other than the input rotation shaft 31 are arranged on the one side in the first orthogonal direction Y1 than the input rotation shaft 31, a space where each part of the reduction gear 30 is not arranged is formed in a space which is on the radial-direction outside of the input rotation shaft 31 except the one side in the first orthogonal direction Y1 of the input rotation shaft 31, and overlaps with the rotary electric machine 20 when viewed in the axial direction X. The inverter circuit 10 can be arranged in this space, and the electric drive apparatus 1 can be miniaturized. Since the inverter circuit 10 is arranged outside the reduction gear housing space 46, the reduction gear and the inverter circuit need not be assembled in the case at the same time like the patent document 2. That is, when the reduction gear housing opening part 45 of the second case member 42 and the first case member 41 are fitted, and the reduction gear 30 is attached to the reduction gear housing space 46, it is not necessary to attach the inverter circuit 10. Accordingly, the lubricating oil of the reduction gear and the like can be prevented from mixing in the inverter circuit 10. The degree of freedom of assembly is enhanced, and workability and productivity are improved.

In the present embodiment, the input rotation shaft 31, the intermediate rotation shaft 33, and the output rotation shaft 32 are arranged in this order on the one side in the first orthogonal direction Y1. The intermediate rotation shaft 33 is arranged on the one side in the first orthogonal direction Y1 and the other side in the second orthogonal direction Z2 of the input rotation shaft 31. The output rotation shaft 32 is arranged on the one side in the first orthogonal direction Y1 and the one side in the second orthogonal direction Z1 of the intermediate rotation shaft 33. As long as the first orthogonal direction Y is within a range of a direction where other rotation shafts are arranged with respect to the input rotation shaft 31, it may deviate from the illustrated direction.

The reduction gear housing opening part 45 of the second case member 42 and the first case member 41 cover the radial-direction outside (around) of the input rotation shaft 31 except the one side in the first orthogonal direction Y1 of the input rotation shaft 31. Accordingly, on the radial-direction outside of the input rotation shaft 31 except the one side in the first orthogonal direction Y1 of the input rotation shaft 31, there is a space via the reduction gear housing opening part 45 of the second case member 42, and the first case member 41. The inverter circuit 10 is arranged utilizing this space.

In the present embodiment, the inverter circuit 10 is arranged on the other side in the first orthogonal direction Y2 of the input rotation shaft 31. According to this configuration, since each part of the reduction gear 30 is arranged on the one side in the first orthogonal direction Y1 of the input rotation shaft 31, and the inverter circuit 10 is arranged on the other side in the first orthogonal direction Y2 of the input rotation shaft 31, weight can be balanced between the one side Y1 and the other side Y2 in the first orthogonal direction of the input rotation shaft 31.

<Inverter housing opening part 47>

The case 40 is provided with the inverter housing opening part 47 which is an opening part which houses the inverter circuit 10, and the opening of the inverter housing opening part 47 is closed by a member other than the first case member 41.

According to this configuration, for example, the inverter circuit 10 can be attached into the inverter housing opening part 47 in a clean room and the like, separately from the reduction gear 30, and a foreign matter can be prevented from mixing into the inverter circuit 10.

In the present embodiment, the inverter housing opening part 47 is formed in the second case member 42. An inner space of the inverter housing opening part 47 and the reduction gear housing space 46 are not communicated. By providing the reduction gear housing opening part 45 and the inverter housing opening part 47 in the second case member 42, the number of parts can be reduced, and the size of the apparatus can be suppressed.

Similar to Embodiment 2 described below, the inverter housing opening part 47 may be formed in a case member which is a body different from the first case member 41 and the second case member 42.

In the present embodiment, the opening of the inverter housing opening part 47 is closed by a housing 16 of the inverter circuit 10 described below. According to this configuration, by inserting each part of the inverter circuit 10 inside the inverter housing opening part 47, fitting the housing 16 of the inverter circuit 10 to the opening of the inverter housing opening part 47, and fixing by a fastening member such as a bolt, the inverter circuit 10 can be attached easily.

The inverter housing opening part 47 opens to the other side in the first orthogonal direction Y2 on the other side in the first orthogonal direction Y2 of the input rotation shaft 31. The inverter circuit 10 is housed inside the inverter housing opening part 47.

According to this configuration, since the inverter circuit 10 is arranged on the other side in the first orthogonal direction Y2 of the input rotation shaft 31, and the inverter housing opening part 47 opens to the same other side in the first orthogonal direction Y2, the inverter circuit 10 can be easily attached from the other side in the first orthogonal direction Y2. Since the one side in the axial direction X1 which is an opening direction of the reduction gear housing opening part 45, and the other side in the first orthogonal direction Y2 which is an opening direction of the inverter housing opening part 47 are orthogonal, an attaching direction of the reduction gear 30 and an attaching direction of the inverter circuit 10 can be orthogonal, and the workability of attachment can be improved.

The inverter housing opening part 47 is provided with an overlap extension part 47a formed by extending from the reduction gear housing opening part 45, on the other side in the first orthogonal direction Y2 of the reduction gear housing opening part 45 of the second case member 42, and an outside extension part 47b formed by extending from the reduction gear housing opening part 45 of the second case member 42 on the other side in the first orthogonal direction Y2 of the first case member 41. The inner space of the inverter housing opening part 47 and the reduction gear housing space 46 are separated by a circumferential wall 45b of the reduction gear housing opening part 45, and the like.

By providing the overlap extension part 47a, the inverter housing opening part 47 can be provided at the position on the other side in the first orthogonal direction Y2 of the reduction gear housing opening part 45 of the second case member 42. Further, by providing the outside extension part 47b, the inverter housing opening part 47 can be expanded to the one side in the axial direction X1 until the position on the other side in the first orthogonal direction Y2 of the first case member 41, that is, the position on the one side in the axial direction X1 of the first case member 41 where the reduction gear housing opening part 45 of the second case member 42 is not arranged. Accordingly, even if the first case member 41 is configured to close the reduction gear housing opening part 45 of the second case member 42, the space on the other side in the first orthogonal direction Y2 of the reduction gear housing space 46 can be used effectively, the inverter housing opening part 47 wide in the axial direction X can be provided, and the enlargement of apparatus can be suppressed.

The position in the second orthogonal direction Z of the inverter housing opening part 47 expands to the one side Z1 and the other side Z2 in the second orthogonal direction than the position in the second orthogonal direction Z of the input rotation shaft 31. By effectively using a space on the other side in the first orthogonal direction Y2 of the reduction gear housing space 46, the inverter housing opening part 47 wide in the second orthogonal direction Z can be provided, and the enlargement of apparatus can be suppressed.

### <Arrangement of each part of inverter circuit 10>

As shown in FIG. 4 and FIG. 5, a width Dy in the first orthogonal direction Y of the inverter circuit 10 is shorter than a width Dz in the second orthogonal direction Z and a width Dx in the axial direction X of the inverter circuit 10.

According to this configuration, a space on the other side in the first orthogonal direction Y2 of the reduction gear housing space 46 is widely used in the second orthogonal direction Z and the axial direction X, the width Dy in the first orthogonal direction Y of the inverter circuit 10 can be narrowed, a projection width of the inverter circuit 10 to the other side in the first orthogonal direction Y2 can be reduced, and the enlargement of apparatus can be suppressed.

Since the smoothing capacitor 11 may have a larger volume and a larger thickness than other components, in order to smooth current at the time of energization of a large current. Accordingly, the arrangement of the smoothing capacitor 11 becomes a problem.

As shown in FIG. 4, the position in the second orthogonal direction Z of the smoothing capacitor 11 is arranged on the one side in the second orthogonal direction Z1 than the position in the second orthogonal direction Z of the input rotation shaft 31. The position in the second orthogonal direction Z of the smoothing capacitor 11 may be arranged on the other side in the second orthogonal direction Z2 than the position in the second orthogonal direction Z of the input rotation shaft 31. The positions in the second orthogonal direction Z of the power semiconductor circuit 12 and the circuit board 13 overlap with the position in the second orthogonal direction Z of the input rotation shaft 31. The width in the first orthogonal direction Y of the smoothing capacitor is longer than the width in the first orthogonal direction Y of the power semiconductor circuit 12 and the circuit board 13. And, the smoothing capacitor 11 is projected to the one side in the first orthogonal direction Y1 than the power semiconductor circuit 12 and the circuit board 13.

According to this configuration, the smoothing capacitor 11 is arranged corresponding to a space on the one side in the second orthogonal direction Z1 of the input rotation shaft 31, The power semiconductor circuit 12 and the circuit board 13 can be arranged corresponding to a space on the other side in the first orthogonal direction Y2 of the input rotation shaft 31. Accordingly, the inverter circuit 10 can be arranged on the one side in the first orthogonal direction Y1 so as to be close to the input rotation shaft 31. The projection width of the inverter circuit 10 to the other side in the first orthogonal direction Y2 can be reduced, and the enlargement of apparatus can be suppressed.

As described above, the inverter circuit 10 is arranged on the one side in the axial direction X1 than the rotary electric machine 20, and has a part which overlaps with the rotary electric machine 20 when viewed in the axial direction X. As shown in FIG. 1, the connection wiring 18 extends from the inverter circuit 10 to the other side in the axial direction X2, penetrates a wall between the inverter circuit 10 and the rotary electric machine 20, and is connected to the winding 24. According to this configuration, the length of the connection wiring 18 can be shortened. In the present embodiment, the wall between the inverter circuit 10 and the rotary electric machine 20 is composed of the wall on the other side in the axial direction X2 of the inverter housing opening part 47, and the wall on the one side in the axial direction X1 of the motor case 25.

In the present embodiment, as shown in FIG. 4, The inverter circuit 10 is provided with the housing 16 which has a surface facing the one side in the first orthogonal direction Y1. The smoothing capacitor 11, the power semiconductor circuit 12, and the circuit board 13 are fixed to the surface on the one side in the first orthogonal direction Y1 of the housing 16. As mentioned above, the housing 16 closes the opening of the inverter housing opening part 47.

According to this configuration, by inserting the smoothing capacitor 11, the power semiconductor circuit 12, and the circuit board 13 inside the inverter housing opening 47, fitting the housing 16 to the opening of the inverter housing opening part 47, and fixing by the fastening member such as the bolt, the inverter circuit 10 can be attached easily. The housing 16 is formed in a plate shape (in this example, rectangular plate shape) long in the second orthogonal direction Z and the axial direction X.

### <Cooler 17>

The inverter circuit 10 is provided with a water-cooled cooler 17. The water-cooled cooler 17 is fixed to a surface on the other side in the first orthogonal direction Y2 of the housing 16, and each part of the inverter circuit 10 is cooled via the housing 16. The cooler 17 may be provided inside the housing 16.

As shown in FIG. 7, in a state where the electric drive apparatus 1 is mounted on the vehicle 50, the other side in the first orthogonal direction Y2 may face the forward side of the vehicle. The vehicle 50 is provided with a radiator 51 cooling a cooling water supplied to the cooler 17, in the front part of the vehicle.

According to this configuration, the cooler 17 can be arranged close to the radiator 51, and a piping 52 of cooling water can be shortened.

Alternatively, in a state where the electric drive apparatus 1 is mounted on the vehicle, the other side in the first orthogonal direction Y2 may face the backward side of the vehicle. According to this configuration, since the inverter circuit 10 is arranged on the backward side of the electric drive apparatus 1, when the vehicle collides forward, the inverter circuit 10 can be prevented from collapsing, and the danger such as the electric leakage can be reduced.

Alternatively, in a state where the electric drive apparatus 1 is mounted on the vehicle 50, the other side in the first orthogonal direction Y2 may face the upper side of the vehicle.

### 2. Embodiment 2

Next, the electric drive apparatus 1 according to Embodiment 2 will be explained. The explanation for constituent parts the same as those in Embodiment 1 will be omitted. The basic configuration of the electric drive apparatus 1 according to the present embodiment is the same as that of Embodiment 1. Embodiment 2 is different from Embodiment 1 in the arrangement of the inverter circuit 10, and the like.

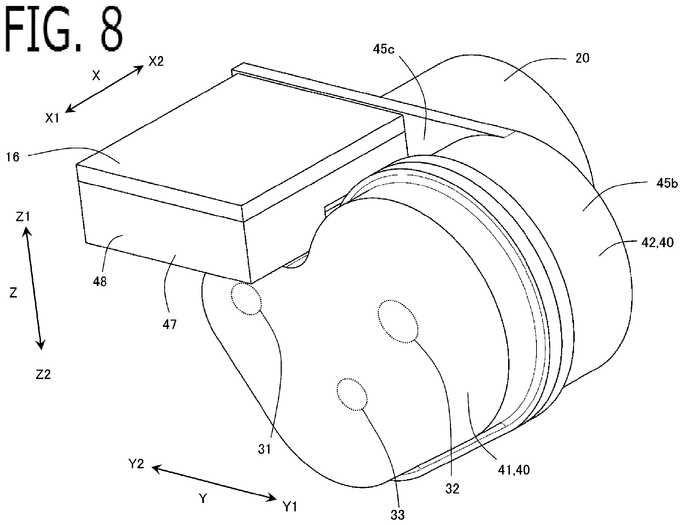

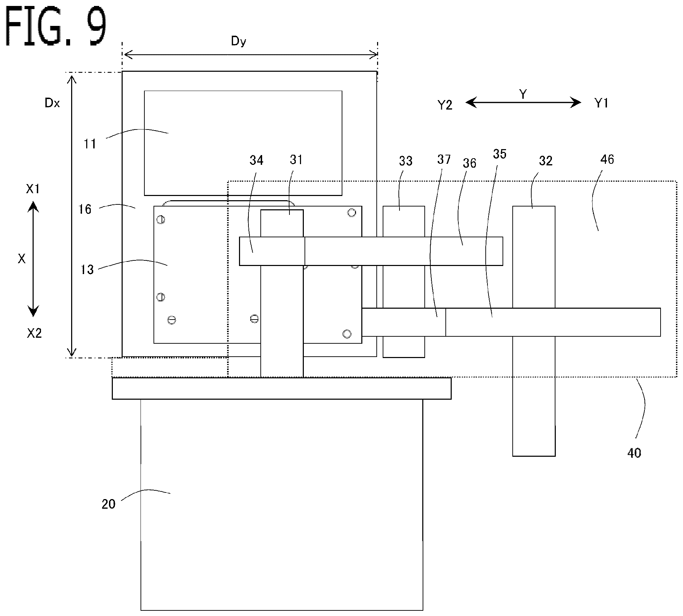

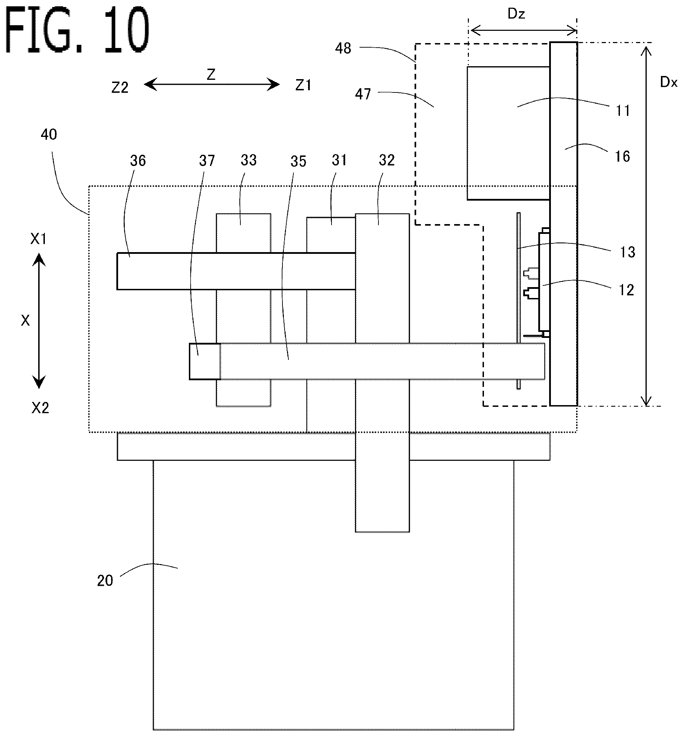

FIG. 8 is an oblique drawing of the electric drive apparatus 1 according to the present embodiment. FIG. 9 is a perspective drawing of the electric drive apparatus 1 on one side in the second orthogonal direction Z1. FIG. 10 is a perspective drawing of the electric drive apparatus 1 viewed on the other side in the first orthogonal direction Y2.

Similar to Embodiment 1, one or more of the rotation shafts (in this example, the output rotation shaft 32, the intermediate rotation shaft 33) of the reduction gear 30 other than the input rotation shaft 31 are arranged on the one side in the first orthogonal direction Y1 than the input rotation shaft 31. The inverter circuit 10 is arranged outside the reduction gear housing space 46, and on the radial-direction outside of the input rotation shaft except the one side in the first orthogonal direction Y1 of the input rotation shaft 31; and is arranged on the one side in the axial direction X1 than the rotary electric machine 20, and has a part overlapping with the rotary electric machine 20 when viewed in the axial direction X.

In the present embodiment, unlike Embodiment 1, the inverter circuit 10 is arranged on the one side in the second orthogonal direction Z1 of the input rotation shaft 31. On the one side in the second orthogonal direction Z1 of the input rotation shaft 31, there is a space interposing the reduction gear housing opening part 45 of the second case member 42, and the first case member 41. The inverter circuit 10 can be arranged utilizing this space. The intermediate rotation shaft 33 is arranged on the one side in the first orthogonal direction Y1 and the other side in the second orthogonal direction Z2 of the input rotation shaft 31. A space on the one side in the second orthogonal direction Z1 of the input rotation shaft 31 becomes wider than a space on the other side in the second orthogonal direction Z2, and the arrangement space of the inverter circuit 10 can be widened.

### <Inverter housing opening part 47>

Similar to Embodiment 1, the case 40 is provided with the inverter housing opening part 47 which is an opening part which houses the inverter circuit 10, and the opening of the inverter housing opening part 47 is closed by the member (in this example, the housing 16 of the inverter circuit 10) other than the first case member 41.

In the present embodiment, unlike Embodiment 1, the inverter housing opening part 47 is formed in a case member (the inverter case 48) which is a body different from the first case member 41 and the second case member 42. The inverter case 48 is fixed to the second case member 42 or the motor case 25 by a fastening member such as a bolt.

According to this configuration, the inverter circuit 10 and the inverter case 48 can be assembled separately from the reduction gear 30, the workability and the productivity can be improved, and the lubricating oil of the reduction gear and the like can be prevented from mixing in the inverter circuit 10. After completion of the electric drive apparatus 1, the inverter circuit 10 and the inverter case 48 can be detached from the electric drive apparatus 1, and the maintainability can be improved.

In the present embodiment, the second case member 42 is provided with a side wall 45c which extends to the other side in the first orthogonal direction Y2 from a bottom wall 45a on the other side in the axial direction X2 of the reduction gear housing opening part 45. And, the end on the other side in the axial direction X2 of the inverter case 48 is fixed to the end on the one side in the axial direction X1 of the side wall 45c of the second case member 42 by a fastening member.

Similar to Embodiment 1, the inverter housing opening part 47 may be formed in the second case member 42. In this case, the inverter housing opening part 47 may be formed to extend to the one side in the axial direction X1 from the side wall 45c of the second case member 42.

The inverter housing opening part 47 opens to the one side in the second orthogonal direction Z1, on the one side in the second orthogonal direction Z1 of the input rotation shaft 31. The inverter circuit 10 is housed inside the inverter housing opening part 47.

According to this configuration, since the inverter circuit 10 is arranged on the one side in the second orthogonal direction Z1 of the input rotation shaft 31, and the inverter housing opening part 47 opens to the same one side in the second orthogonal direction Z1, the inverter circuit 10 can be easily attached from the one side in the second orthogonal direction Z1. Since the one side in the axial direction X1 which is an opening direction of the reduction gear housing opening part 45, and the one side in the second orthogonal direction Z1 which is an opening direction of the inverter housing opening part 47 are orthogonal, an attaching direction of the reduction gear 30 and an attaching direction of the inverter circuit 10 can be orthogonal, and the workability of attachment can be improved.

The inverter housing opening part 47 is provided with a part arranged on the one side in the second orthogonal direction Z1 of the reduction gear housing opening part 45 of the second case member 42, and a part arranged on the one side in the second orthogonal direction Z1 of the first case member 41.

According to this configuration, the inverter housing opening part 47 can be expanded to the one side in the axial direction X1 until the position on the one side in the axial direction X1 of the first case member 41 where the reduction gear housing opening part 45 of the second case member 42 is not arranged. Accordingly, even if the first case member 41 is configured to close the reduction gear housing opening part 45 of the second case member 42, by using effectively a space on the one side in the second orthogonal direction Z1 of the input rotation shaft 31, the inverter housing opening part 47 wide in the axial direction X can be provided, and the enlargement of apparatus can be suppressed.

The position in the first orthogonal direction Y of the inverter housing opening part 47 expands to the one side Y1 and the other side Y2 in the first orthogonal direction than the position of the input rotation shaft 31 in the first orthogonal direction Y. By using effectively a space on the one side in the second orthogonal direction Z1 of the input rotation shaft 31, the inverter housing opening part 47 wide in the first orthogonal direction Y can be provided, and the enlargement of apparatus can be suppressed.

### <Arrangement of each part of inverter circuit 10>

As shown in FIG. 9 and FIG. 10, a width Dz of the inverter circuit 10 in the second orthogonal direction Z is shorter than a width Dy in the first orthogonal direction Y and a width Dx in the axial direction X of the inverter circuit 10.

According to this configuration, a space on the one side in the second orthogonal direction Z1 of the input rotation shaft 31 is widely used in the first orthogonal direction Y and the axial direction X, the width Dz of the inverter circuit 10 in the second orthogonal direction Z can be narrowed, the projection width of the inverter circuit 10 to the one side in the second orthogonal direction Z1 can be reduced, and the enlargement of apparatus can be suppressed.

As shown in FIG. 10, the position of the smoothing capacitor 11 in the axial direction X is arranged on the one side X1 of the axial direction X than the position of the input rotation shaft 31 in the axial direction X. The positions of the power semiconductor circuit 12 and the circuit board 13 in the axial direction X overlap with the position of the input rotation shaft 31 in the axial direction X. The width of the smoothing capacitor 11 in the second orthogonal direction Z is longer than the widths of the power semiconductor circuit 12 and the circuit board 13 in the second orthogonal direction Z, and the smoothing capacitor 11 is projected to the other side in the second orthogonal direction Z2 than the power semiconductor circuit 12 and the circuit board 13.

According to this configuration, the smoothing capacitor 11 is arranged corresponding to a space on the one side in the axial direction X1 of the input rotation shaft 31, and the power semiconductor circuit 12 and the circuit board 13 can be arranged corresponding to a space on the one side in the second orthogonal direction Z1 of the input rotation shaft 31. Accordingly, the inverter circuit 10 can be arranged on the other side in the second orthogonal direction Z2 so as to be close to the input rotation shaft 31. Accordingly, the projection width of the inverter circuit 10 to the one side in the second orthogonal direction Z1 can be reduced, and the enlargement of apparatus can be suppressed. Since the smoothing capacitor 11 is arranged on the opposite side of the rotary electric machine 20 interposing the reduction gear 30, weights in the axial direction X can be balanced.

As described above, the inverter circuit 10 is arranged on the one side in the axial direction X1 than the rotary electric machine 20, and has a part which overlaps with the rotary electric machine 20 when viewed in the axial direction X. The connection wiring 18 extends from the inverter circuit 10 to the other side in the axial direction X2, penetrates a wall between the inverter circuit 10 and the rotary electric machine 20, and is connected to the winding 24. According to this configuration, the length of the connection wiring 18 can be shortened. In the present embodiment, the wall between the inverter circuit 10 and the rotary electric machine 20 is composed of the wall on the other side in the axial direction X2 of the inverter housing opening part 47, and the wall on the one side in the axial direction X1 of the motor case 25.

In the present embodiment, the inverter circuit 10 is provided with the housing 16 which has a surface facing the other side in the second orthogonal direction Z2. The smoothing capacitor 11, the power semiconductor circuit 12, and the circuit board 13 are fixed to the surface on the other side in the second orthogonal direction Z2 of the housing 16. As mentioned above, the housing 16 closes the opening of the inverter housing opening part 47.

According to this configuration, by inserting the smoothing capacitor 11, the power semiconductor circuit 12, and the circuit board 13 inside the inverter housing opening 47, fitting the housing 16 to the opening of the inverter housing opening part 47, and fixing by the fastening member such as the bolt, the inverter circuit 10 can be assembled easily. The housing 16 is formed in a plate shape (in this example, rectangular plate shape) long in the first orthogonal direction Y and the axial direction X.

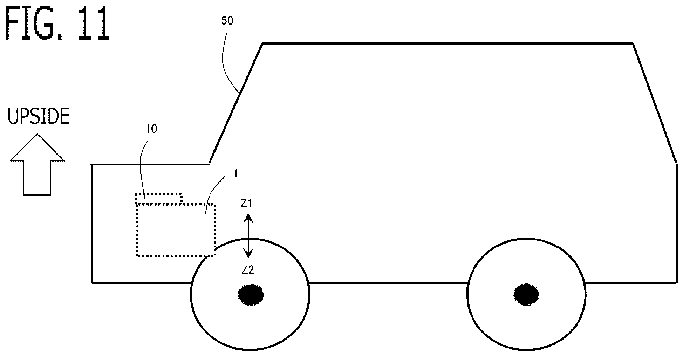

As shown in FIG. 11, in a state where the electric drive apparatus 1 is mounted on the vehicle 50, the one side in the second orthogonal direction Z1 may face the upper side of the vehicle 50. According to this configuration, the inverter circuit 10 can be protected from the stepping stone from the road surface, and the like. When the electric drive apparatus 1 is attached to the vehicle, the inverter circuit 10 and the vehicle side connector can be connected from the upper side of the vehicle, and the workability and the productivity can be improved. After attaching to the vehicle, the inverter circuit 10 can be easily maintained from the upper side of the vehicle.

Similar to Embodiment 1, the water-cooled cooler 17 may be provided in the inverter circuit 10, and the water-cooled cooler 17 may be fixed to the surface on the one side in the second orthogonal direction Z1 of the housing 16. Alternatively, the cooler 17 may be provided inside the housing 16.

In a state where the electric drive apparatus 1 is mounted on the vehicle 50, the other side in the first orthogonal direction Y2 may face the forward side of the vehicle. The cooler 17 can be arranged close to the radiator 51. Alternatively, in a state where the electric drive apparatus 1 is mounted on the vehicle, the other side in the first orthogonal direction Y2 may face the backward side of the vehicle. Since the inverter circuit 10 is arranged on the backward side of the electric drive apparatus 1, when the vehicle collides a forward object, the inverter circuit 10 can be protected, and the danger such as the electric leakage can be reduced.

Although the present disclosure is described above in terms of various exemplary embodiments and implementations, it should be understood that the various features, aspects and functionality described in one or more of the individual embodiments are not limited in their applicability to the particular embodiment with which they are described, but instead can be applied, alone or in various combinations to one or more of the embodiments. It is therefore understood that numerous modifications which have not been exemplified can be devised without departing from the scope of the present disclosure. For example, at least one of the constituent components may be modified, added, or eliminated. At least one of the constituent components mentioned in at least one of the preferred embodiments may be selected and combined with the constituent components mentioned in another preferred embodiment.

### REFERENCE SIGNS LIST

1 Electric drive apparatus, 10 Inverter circuit, 11 Smoothing Capacitor, 12 Power Semiconductor Circuit, 13 Circuit Board, 16 Housing, 17 Cooler, 18 Connection Wiring, 20 Rotary Electric Machine, 23 Rotor Rotation Shaft, 24 Winding, 30 Reduction Gear, 31 Input Rotation Shaft, 32 Output Rotation Shaft, 40 Case, 41 First Case Member, 42 Second Case Member, 45 Reduction Gear Housing Opening Part, 46 Reduction Gear Housing Space, 47 Inverter Housing Opening Part, 47a Overlap extension part, 47b Outside extension part, 48 Inverter Case, 50 Vehicle, 51 Radiator, X Axial direction, X1 One side in the axial direction, X2 The other side in the axial direction, Y First orthogonal direction, Y1 One side in the first orthogonal direction, Y2 The other side in the first orthogonal direction, Z Second orthogonal direction, Z1 One side in the second orthogonal direction, Z2 The other side in the second orthogonal direction

## Claims

1. An electric drive apparatus comprising:
an inverter circuit that converts between DC power and AC power;
a rotary electric machine that is provided with a winding to which AC power converted by an inverter circuit is supplied, and a rotor rotation shaft rotating integrally with a rotor;
a reduction gear that reduces and outputs the rotational speed of the rotor rotation shaft; and
a case that houses at least the reduction gear,
wherein the reduction gear is provided with at least a plurality of rotation shafts arranged in parallel with an axial direction of the rotor rotation shaft, and a plurality of gears,
the plurality of rotation shafts includes an input rotation shaft extending on coaxially from the rotor rotation shaft to one side in the axial direction, and rotating integrally with the rotor rotation shaft, and an output rotation shaft outputting rotation to outside of the reduction gear,
the case is provided with a second case member with a bottomed tubular reduction gear housing opening part opened to the one side in the axial direction, and a first case member closing an opening of the reduction gear housing opening part,
the reduction gear is housed in a reduction gear housing space formed by the reduction gear housing opening part of the second case member and the first case member,
defining a specific direction orthogonal to the axial direction as a first orthogonal direction, one or more of the rotation shafts other than the input rotation shaft are arranged on one side in the first orthogonal direction than the input rotation shaft,
the inverter circuit is arranged outside the reduction gear housing space, and on a radial-direction outside of the input rotation shaft except the one side in the first orthogonal direction of the input rotation shaft; and is arranged on the one side in the axial direction than the rotary electric machine, and has a part which overlaps with the rotary electric machine when viewed in the axial direction.

2. The electric drive apparatus according to claim 1,
wherein the case is provided with an inverter housing opening part which is an opening part housing the inverter circuit, and an opening of the inverter housing opening part is closed by a member other than the first case member.

3. The electric drive apparatus according to claim 1 or 2,
wherein the inverter circuit is arranged on the other side in the first orthogonal direction of the input rotation shaft.

4. The electric drive apparatus according to claim 3,
wherein, defining a direction orthogonal to the axial direction and the first orthogonal direction as a second orthogonal direction, a width of the inverter circuit in the first orthogonal direction is shorter than a width of the inverter circuit in the second orthogonal direction and a width of the inverter circuit in the axial direction.

5. The electric drive apparatus according to claim 3 or 4,
wherein the case is provided with an inverter housing opening part opened to the other side in the first orthogonal direction, on the other side in the first orthogonal direction of the input rotation shaft, and
the inverter circuit is housed inside the inverter housing opening part.

6. The electric drive apparatus according to claim 5,
wherein the inverter housing opening part is formed in the second case member, and
the inverter housing opening part is provided with an overlap extension part formed by extending from the reduction gear housing opening part, on the other side in the first orthogonal direction of the reduction gear housing opening part of the second case member, and an outside extension part formed by extending from the reduction gear housing opening part of the second case member, on the other side in the first orthogonal direction of the first case member.

7. The electric drive apparatus according to claim 5 or 6,
wherein the inverter circuit is provided with a smoothing capacitor, a power semiconductor circuit, and a circuit board,
defining a direction orthogonal to the axial direction and the first orthogonal direction as a second orthogonal direction, a position of the smoothing capacitor in the second orthogonal direction is arranged on one side or the other side in the second orthogonal direction than a position of the input rotation shaft in the second orthogonal direction, positions of the power semiconductor circuit and the circuit board in the second orthogonal direction overlap with the position of the input rotation shaft in the second orthogonal direction,
a width of the smoothing capacitor in the first orthogonal direction is longer than widths of the power semiconductor circuit and the circuit board in the first orthogonal direction, and
the smoothing capacitor is projected to one side in the first orthogonal direction than the power semiconductor circuit and the circuit board.

8. The electric drive apparatus according to any one of claims 5 to 7,
wherein the inverter circuit is provided with a housing having a surface facing one side in the first orthogonal direction; and a smoothing capacitor, a power semiconductor circuit, and a circuit board which are fixed to the surface of the housing facing on one side in the first orthogonal direction, and
the housing closes an opening of the inverter housing opening part.

9. The electric drive apparatus according to claim 1 or 2,
wherein, defining a direction orthogonal to the axial direction and the first orthogonal direction as a second orthogonal direction, the inverter circuit is arranged on one side in the second orthogonal direction of the input rotation shaft.

10. The electric drive apparatus according to claim 9,
wherein a width of the inverter circuit in the second orthogonal direction is shorter than a width of the inverter circuit in the first orthogonal direction and a width of the inverter circuit in the axial direction.

11. The electric drive apparatus according to claim 9 or 10,
wherein the case is provided with an inverter housing opening part opened to one side in the second orthogonal direction, on one side in the second orthogonal direction of the input rotation shaft, and the inverter circuit is housed inside the inverter housing opening part.

12. The electric drive apparatus according to claim 11,
wherein the inverter circuit is provided with a smoothing capacitor, a power semiconductor circuit, and a circuit board,
a position of the smoothing capacitor in the axial direction is arranged on one side in the axial direction than a position of the input rotation shaft in the axial direction,
positions of the power semiconductor circuit and the circuit board in the axial direction overlap with a position of the input rotation shaft in the axial direction,
a width of the smoothing capacitor in the second orthogonal direction is longer than widths of the power semiconductor circuit and the circuit board in the second orthogonal direction, and
the smoothing capacitor is projected to the other side in the second orthogonal direction than the power semiconductor circuit and the circuit board.

13. The electric drive apparatus according to claim 11 or 12,
wherein the inverter circuit is provided with a housing having a surface facing the other side in the second orthogonal direction; and a smoothing capacitor, a power semiconductor circuit, and a circuit board which are fixed to the surface of the housing facing on the other side in the second orthogonal direction, and
the housing closes an opening of the inverter housing opening part.

14. The electric drive apparatus according to any one of claims 9 to 13,
wherein, in a state where the electric drive apparatus is mounted on a vehicle, one side in the second orthogonal direction faces an upper side of the vehicle.

15. The electric drive apparatus according to any one of claims 1 to 14,
wherein the inverter circuit is provided with a water-cooled cooler,
in a state where the electric drive apparatus is mounted on a vehicle, the other side in the first orthogonal direction faces a forward side of the vehicle, and the vehicle is provided with a radiator cooling a cooling water supplied to the cooler, in a front part of the vehicle.

16. The electric drive apparatus according to any one of claims 1 to 14,
wherein, in a state where the electric drive apparatus is mounted on a vehicle, other side in the first orthogonal direction faces a backward side of the vehicle.

17. The electric drive apparatus according to any one of claims 1 to 16,
wherein a connection wiring extends from the inverter circuit to the other side in the axial direction, penetrates a wall between the inverter circuit and the rotary electric machine, and is connected to the winding.

18. The electric drive apparatus according to any one of claims 2, 5, and 11,
wherein the inverter housing opening part is formed in the second case member, and an inner space of the inverter housing opening part and the reduction gear housing space are not communicated with each other.

19. The electric drive apparatus according to any one of claims 2, 5, and 11,
wherein the inverter housing opening part is formed in a case member which is a body different from the first case member and the second case member.
